# EUROPEAN PATENT APPLICATION

(11) **EP 3 291 093 A1**
(43) Date of publication of application: **07.03.2018**
(21) Application number: 15893107.1
(22) Date of filing: 28.10.2015
(51) Int. Cl.: G06F 11/30

(54) **TEMPERATURE DATA PROCESSING METHOD AND SYSTEM**

(30) Priority: 26.05.2015 CN 201510274676
(71) Applicant: Phicomm (Shanghai) Co., Ltd., Shanghai 201616 (CN)
(72) Inventor: LI, Quanzhan, Shanghai 201616 (CN); WANG, Jun, Shanghai 201616 (CN); WANG, Anqing, Shanghai 201616 (CN); YU, Jiang, Shanghai 201616 (CN)
(74) Representative: Sun, Yiming
(86) International application number: PCT/CN2015/093040
(87) International publication number: WO 2016/188031

(57) **Abstract**

The present disclosure provides a temperature data processing method, including: real-time sampling surface temperature data of positions for temperature measurement on a mobile terminal; uploading the sampled surface temperature data; compiling the surface temperature data according to the predefined format to obtain the real-time temperature data under a N-th working mode, wherein N is equal to or greater than 1 and equal to or less than M; outputting a working mode switching instruction and returning to the step of the real-time sampling; outputting loop instructions to perform the above steps cyclically until the step of sampling the real-time temperatures under a M-th working mode of the mobile terminal is completed; generating a temperature evolution curve chart according to the curves of the real-time temperature data under the M working mode of the mobile terminal compiled in a predefined manner to obtain the operation situation of the mobile terminal.

## Description

### TECHNICAL FIELD

The present disclosure relates to a data processing method and system, in particular, to a temperature data processing method and system.

### BACKGROUND

NFC (Near Field Communication) is a technique evolved from contactless RFID (RadioFrequency Identification) and is based on RFID and interconnection techniques. Near field communication is a short-range high-frequency radio technique operating at a frequency of 13.56 MHz within a range of 20 cm to perform identification and data exchange with a compatible device in such a short distance. Point-to-point mode can be used to exchange data, with fast established transmission and low power consumption, the connecting of two devices with NFC function may establish data point-to-point transmission.

The existing temperature data processing solution is scanning the mobile terminal by a thermal imager in hand, for example, for the temperature of a mobile phone. However, such a thermal imager cannot upload the data automatically, and the detected temperature thereby is typically the internal temperature of the mobile phone rather than the surface temperature of its housing, which departs from the true intention of temperature-rise tests and requires a lot of tedious manual operations lead to measurement errors.

Therefore, how to provide a temperature data processing method and system to solve the problems that the housing temperature of the mobile terminal cannot be directly measured, the temperature cannot be uploaded automatically and measurement errors occur in manually operation has indeed become an urgent technical problem for practitioners in the art.

### SUMMARY

Embodiments of the present disclosure provide a temperature data processing method and system to solve the problems that the housing temperature of the mobile terminal cannot be directly measured, the temperature cannot be uploaded automatically and measurement errors occur in manually operation.

In order to achieve the above object and other related objects, in an aspect, the present disclosure provides a temperature data processing method, used in a mobile terminal with near field communication function, the mobile terminal can be operated with M working modes, the temperature data processing method including the steps of: real-time sampling surface temperature data from the positions for temperature measurement of the NFC (near field communication) mobile terminal, when the mobile terminal starts the N-th working mode; wherein N is equal to or greater than 1 and equal to or less than M, and M is a positive integer that is equal to or greater than 2; uploading the sampled surface temperature data from the positions for temperature measurement; processing the sampled surface temperature data from the positions for temperature measurement, according to the predefined format, so as to obtain the real-time temperature data from the positions for temperature measurement in the N-th working mode; outputting a switching instruction which switches the mobile terminal from the N-th working mode to the (N+1)-th working mode, and returning to the step of real-time sampling surface temperature data from the positions for temperature measurement of the mobile terminal; outputting loop instructions to perform the above steps cyclically until the step of sampling the real-time temperatures data from the positions for temperature measurement in the M-th working mode of the mobile terminal is completed; generating a temperature evolution curve chart according to the curves of the real-time temperature data from the positions for temperature measurement in M working mode of the mobile terminal compiled in a predefined manner, so as to obtain the operation situation of the mobile terminal.

Optionally, the plotted temperature evolution curve chart includes standard temperature curves corresponding to the temperature curves from the temperature data of positions for temperature measurement in M working mode..

Optionally, the temperature data processing method further includes determining whether an exception occurs during the operation of the mobile terminal, according to the corresponding standard temperature curve of the positions for temperature measurement in M working mode; if so, identifying the reasons and deploying corresponding actions; if not, returning to the step of real-time sampling surface temperature data from the positions for temperature measurement of the mobile terminal.

Optionally, the criteria for determining whether an exception occurs during the operation of the mobile terminal is: determining whether corresponding standard temperature curve of each position for temperature measurement in M working mode is within an allowable variation range for the standard temperature curve; if so, indicating that no exceptions exist in the operation of the mobile terminal; and if not, indicating exceptions exist in the operation of the mobile terminal.

In another aspect, the present disclosure also provides a temperature data processing system, used in a mobile terminal with near field communication function, the mobile terminal can be operated in M working modes, temperature data processing system including: a sampling module, configured to real-time sample surface temperature data from the positions for temperature measurement of the NFC (near field communication) mobile terminal, when the mobile terminal starts the N-th working mode; wherein N is equal to or greater than 1 and equal to or less than M, and M is a positive integer that is equal to or greater than 2; a transmission module coupled to the sampling module, configured to upload the sampled surface temperature data from the positions for temperature measurement; a data compiling module coupled to the transmission module, configured to compile the uploaded surface temperature data from the positions for temperature measurement according to the predefined format so as to obtain the real-time temperature data from the positions for temperature measurement within the N-th working mode; a working mode switching module respectively coupled to the sampling module and the data compiling module, configured to output a switching instruction to switch the working mode from N-th to N+1-th, and trigger the sampling module and a loop module to real-time sample surface temperature data from the positions for temperature measurement of the mobile terminal sequentially; the loop module respectively coupled to the sampling module, the transmission module, the data compiling module and the working mode switching module, configured to output loop instructions to call the sampling module, the transmission module, the data compiling module and the working mode switching module in a loop until the process for real-time sampling surface temperature data from the positions for temperature measurement of the mobile terminal in the M-th working mode is completed; a plotting module coupled to the data compiling module and the loop module, configured to generate a temperature evolution curve chart according to the curves of the real-time temperature data from the positions for temperature measurement in M working mode of the mobile terminal compiled in a predefined manner, so as to obtain the operation situation of the mobile terminal.

Optionally, standard temperature curves corresponding to the positions for temperature measurement in M working mode are prestored in the plotting module.

Optionally, the temperature data processing system further includes a determining module coupled to the plotting module, configured to determine whether an exception occurs during the operation of the mobile terminal, according to the corresponding standard temperature curve of the positions for temperature measurement in M working mode; if so, calling an identifying module to identify the exception and take corresponding actions, if not, calling the sampling module.

Optionally, the temperature data processing system further includes an alarming module coupled to the determining module, configured to raise an alarm when an exception is identified during the operation of the mobile terminal.

In a further aspect, the present disclosure provides a near field communication-based tag, the near field communication-based tag is attached to the outside of a mobile terminal with a near field communication function, the mobile terminal may work in M working modes, the near field communication-based tag includes: an antenna coil, configured to receive a scan signal when the mobile terminal with a near field communication function scans the tag; a temperature sampling unit, after receiving the scan signal, configured to real-time sample surface temperature data from the positions for temperature measurement of the NFC (near field communication) mobile terminal when the mobile terminal starts the N-th working mode; wherein N is equal to or greater than 1 and equal to or less than M, and M is a positive integer that is equal to or greater than 2; a transmission unit, configured to transmit the sampled surface temperature data from the positions for temperature measurement of the NFC (near field communication) mobile terminal to the mobile terminal.

In a last aspect, the present disclosure provides a server, the server is coupled to a mobile terminal with near field communication function the server including:
a data receiving unit, configured to receive the surface temperature data from the positions for temperature measurement of the mobile terminal;; a data compiling unit connected to the data receiving unit, configured to compile the received surface temperature data from the positions for temperature measurement according to the predefined format so as to obtain the real-time temperature data from the positions for temperature measurement within the N-th working mode;; a working mode switching unit coupled to the sampling module, configured to output a switching instruction to switch the working mode from N-th to N+1-th of the mobile terminal, and trigger a loop unit and the temperature sampling unit tagged with NFC (near field communication) to real-time sample surface temperature data from the positions for temperature measurement of the mobile terminal sequentially;
the loop unit coupled to the data receiving unit, the data compiling unit, and the working mode switching unit, configured to output loop instructions until the process for sampling the real-time temperatures data from the positions for temperature measurement in the M-th working mode of the mobile terminal is completed; a plotting unit coupled to the data compiling unit and the loop unit, configured to generate a temperature evolution curve chart according to the curves of the real-time temperature data from the positions for temperature measurement in M working mode of the mobile terminal compiled in a predefined manner, so as to obtain the operation situation of the mobile terminal..

As mentioned above, the temperature data processing method and system of the present disclosure show the following benefits:
The temperature data processing method and system of the present disclosure allows fast and easy reading of temperature data, easy performance of accurate temperature-rise tests, automatic uploading of temperature data, avoidance of a lot of tedious manual operations and saves the test time.

### BRIEF DESCRIPTION OF THE DRAWINGS

Fig. 1 shows a flowchart illustrating a temperature data processing method of the present disclosure.
Fig. 2 shows a structural schematic illustrating the principles of a temperature data processing system of the present disclosure.
Fig. 3 shows a structural schematic illustrating the principles of a near field communication-based tag of the present disclosure.
Fig. 4 shows a structural schematic illustrating the principles of a server of the present disclosure.

### Description of Reference Numerals of Elements

- 1: Temperature data processing system
- 11: Sampling module
- 12: Transmission module
- 13: Data compiling module
- 14: Working mode switching module
- 15: Loop module
- 16: Plotting module
- 17: Determining module
- 18: Alarming module
- 19: Identifying module
- 20: Near field communication-based tag
- 201: Antenna coil
- 202: Temperature sampling unit
- 203: Transmission unit
- 30: Server
- 301: Data receiving unit
- 302: Data compiling unit
- 303: Working mode switching unit
- 304: Loop unit
- 305: Plotting unit
- 306: Determining module
- 307: Alarming unit
- 308: Identifying unit
- S1-S8: Steps

### DETAILED DESCRIPTION

The present disclosure will be described below by means of specific embodiments. Other advantages and effects of the disclosure will be readily understood by those skilled in the art from the disclosure herein. The present disclosure may also be implemented or utilized as other different specific embodiments, and various modifications or changes may be made to the details disclosed herein from different views and for different applications without departing from the spirit of the disclosure. It is noted that in case of no conflict, the following embodiments and the features in the embodiments may be combined each other

It is noted that the drawings presented in the following embodiments are intended merely to illustrate the basic concept of the present disclosure in a schematic manner and hence only show the components related hereto which are not drawn to their quantities, shapes and sizes in actual implementations where their configurations, quantities and scales may vary arbitrarily and their arrangements may also be more complex.

The present disclosure provides a temperature data processing method and system employing an NFC (Near Field Communication) tag with a temperature sampling function to perform sampling on a mobile terminal. In actual implementations, the electronic device is, for example, a smart phone, a tablet, a laptop, etc. Another mobile terminal with NFC function opens an application, approaches the tag of the target mobile terminal and reads the sampled temperature data in the tag.

### EMBODIMENT 1

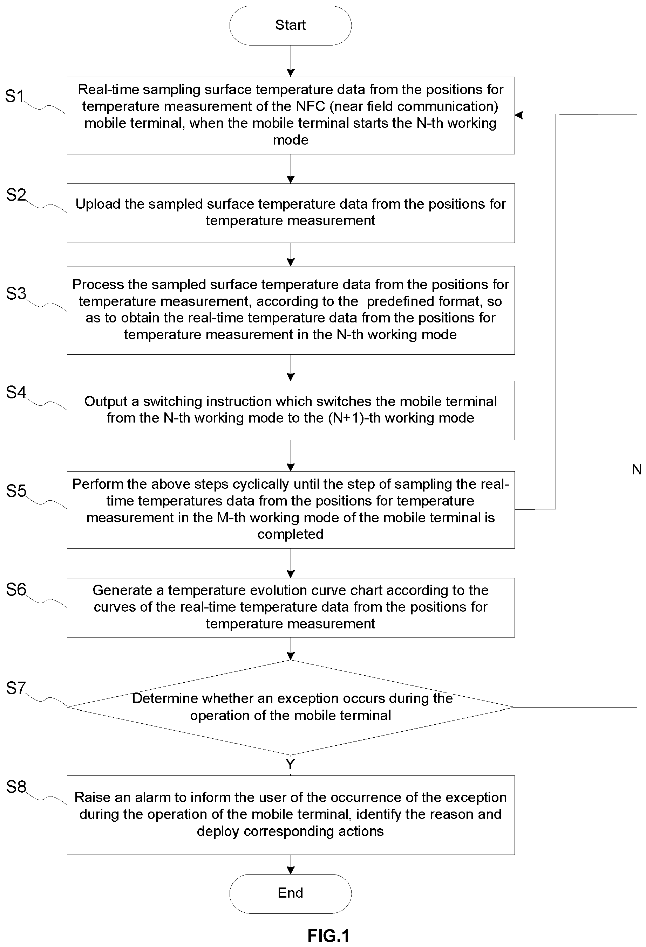

This embodiment provides a temperature data processing method used in a mobile terminal with near field communication function. The mobile terminal can be operated in M working modes. See reference Fig. 1, a flowchart schematically showing a temperature data processing method. As shown in Fig. 1, the temperature data processing method includes the following steps.

In S1, the mobile terminal starts the N-th working mode. For example, in this embodiment, the M working modes include phone call mode, game mode, video playing mode, audio playing mode, web browsing mode and other working modes. The N-th working mode is video playing mode. The surface temperature data is real-time sampled from the positions for temperature measurement of the near field communication-based mobile terminal in the video playing mode, wherein N is equal to or greater than 1 and equal to or less than M, and M is a positive integer that is equal to or greater than 2. In this embodiment, the positions for temperature measurement include the sites of a camera, an earphone and a speaker, upper of a display screen, middle of the display screen, lower of the display screen, a rear housing and other sites.

In S2, the sampled surface temperature data of the positions for temperature measurement of the mobile terminal in the video playing mode is uploaded, which includes the surface temperature data sampled from the sites of the camera, the earphone, the speaker, the upper of the display screen, the middle of the display screen, the lower of the display screen, the rear housing and the other sites for temperature measurement.

In S3, the sampled surface temperature data of the positions for temperature measurement are compiled according to the predefined format, so as to obtain the temperature data from the positions for temperature measurement in the N-th working mode, i.e., the video playing mode. In this embodiment, the predefined format is the format of a predefined table, as shown in Table 1. In this step, the compiling process is a process of filling the sampled real-time temperatures according to predetermined positions.

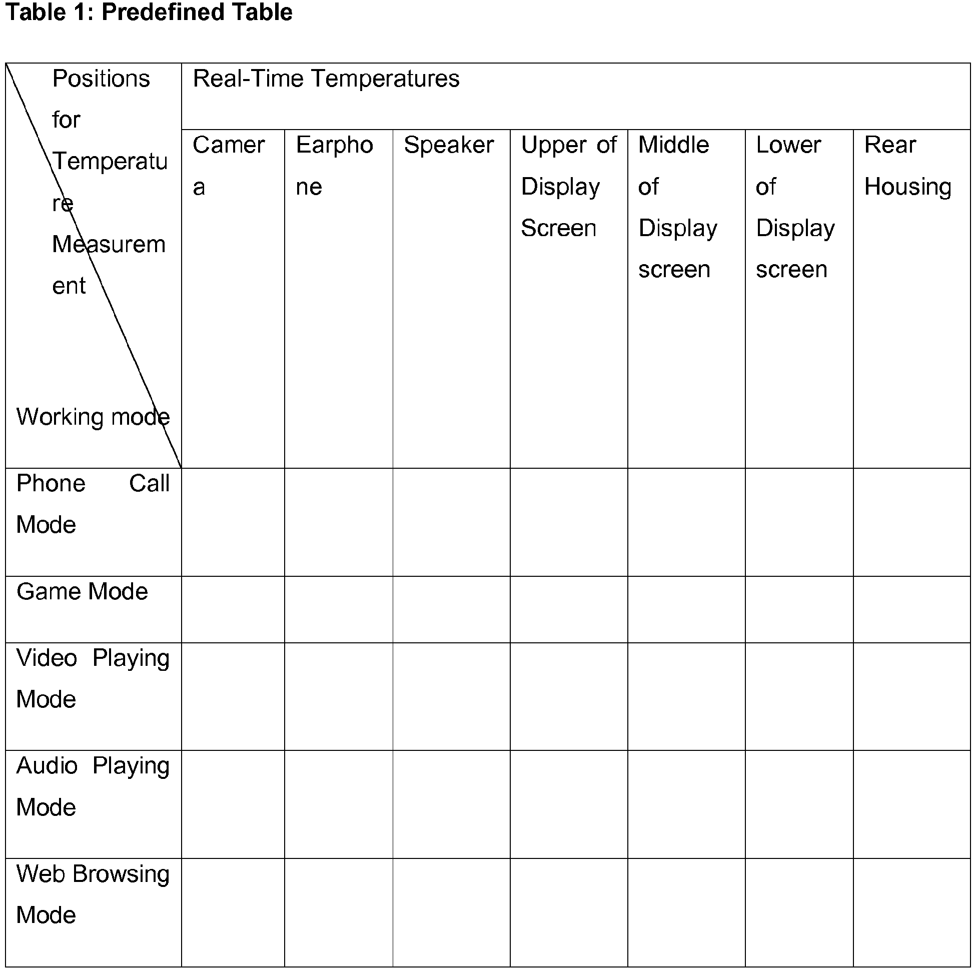

In S4, a switching instruction which switches the mobile terminal from the N-th working mode to the (N+1)-th working mode is output. In this embodiment, the switching instruction switches the mobile terminal from the video playing mode to the game mode. The method then returns to step S1 to real-time sample surface temperature data from the positions for temperature measurement of the mobile terminal.

In S5, the above steps are cyclically performed until the step of sampling the real-time temperature data from the positions for temperature measurement in the M-th working mode of the mobile terminal, i.e., the last working mode, is completed.

In S6, a temperature evolution curve chart is generated according to the curves of the real-time temperature data from the positions for temperature measurement in M working mode of the mobile terminal compiled in a predefined manner, so as to obtain the operation situation of the mobile terminal. In this embodiment, the temperature evolution curve chart plotted in step S6 includes standard temperature curves corresponding to the temperature curves from the temperature data of positions for temperature measurement in M working mode.

In S7, it is determined whether an exception occurs during the operation of the mobile terminal, according to the corresponding standard temperature curve of the positions for temperature measurement in M working mode. If so, step S8 is performed. If not, the method returns to step S1 to continue real-time sampling of surface temperature data from the positions for temperature measurement of the mobile terminal. In this step, the criteria for determining whether an exception occurs during the operation of the mobile terminal is: determining whether corresponding standard temperature curve of each position for temperature measurement in M working mode is within an allowable variation range for the standard temperature curve; if so, indicating that no exceptions exist in the operation of the mobile terminal, and the method returns to step S1; and if not, indicating that exceptions exist in the operation of the mobile terminal, and the method proceeds to step S8.

In S8, an alarm is raised to inform the user of the occurrence of the exception during the operation of the mobile terminal, followed by identifying the reason and deploying corresponding actions.

The temperature data processing method provided in this embodiment allows fast and easy reading of temperature data, easy performance of accurate temperature-rise tests, automatic uploading of temperature data, avoidance of a lot of tedious manual operations and saves the test time.

### EMBODIMENT 2

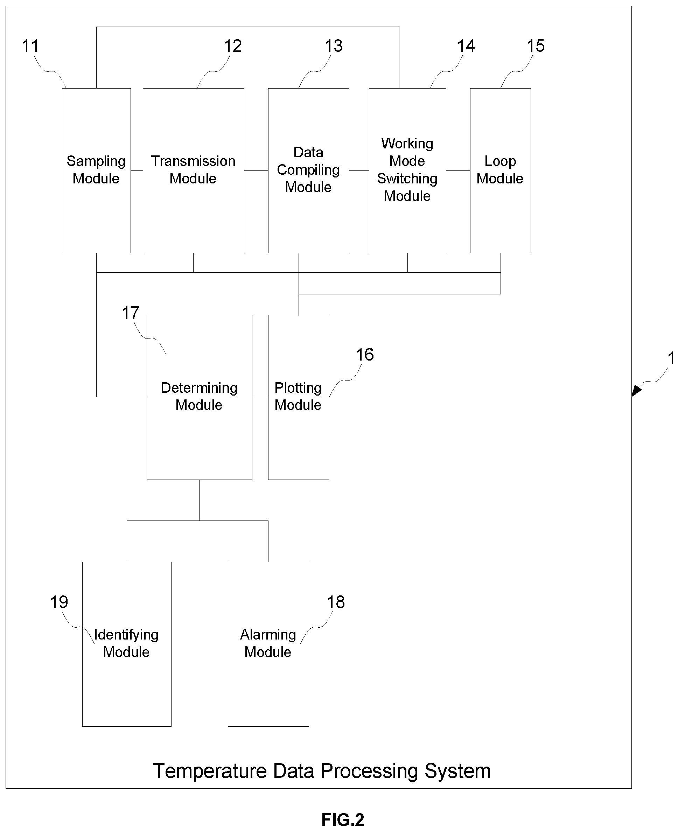

This embodiment provides a temperature data processing system 1 used in a mobile terminal with a near field communication function. The mobile terminal can be operated in M working modes. For example, in this embodiment, M is a positive integer that is equal to or greater than 2, and the M working modes include phone call mode, game mode, video playing mode, audio playing mode, web browsing mode and other working modes. See reference Fig. 2, a structural schematic illustrating the principles of the temperature data processing system. As shown in Fig. 2, the temperature data processing system 1 includes: a sampling module 11, a transmission module 12, a data compiling module 13, a working mode switching module 14, a loop module 15, a plotting module 16, a determining module 17, an alarming module 18 and an identifying module 19.

The sampling module 11 is configured to, when the mobile terminal starts the N-th working mode which is, for example, the video playing mode, real-time sample surface temperature data from positions for temperature measurement of the near field communication-based mobile terminal in the video playing mode, wherein N is equal to or greater than 1 and equal to or less than M. In this embodiment, the positions for temperature measurement include the sites of a camera, an earphone and a speaker, upper of a display screen, middle of the display screen, lower of the display screen, a rear housing and other sites.

The transmission module 12 coupled to the sampling module 11 is configured to upload the sampled surface temperature data of the positions for temperature measurement of the mobile terminal in the video playing mode, i.e., uploading the surface temperature data of the sites of the camera, the earphone and the speaker, the upper of the display screen, the middle of the display screen, the lower of the display screen, the rear housing and the other sites for temperature measurement. In this embodiment, the transmission module 12 includes a mobile terminal with a near field communication function, and the surface temperature data sampled by the sampling module 11 from the positions for temperature measurement of the near field communication-based mobile terminal in the video playing mode are transmitted to another mobile terminal with a near field communication function, i.e., the transmission module 12.

The data compiling module 13 coupled to the transmission module 12 is configured to perform a compiling process on the sampled surface temperature data of the positions for temperature measurement in accordance with a predefined format in order to obtain real-time temperatures at the positions for temperature measurement in the N-th working mode, i.e., the video playing mode. In this embodiment, the predefined format is the format of a predefined table, as shown in Table 1 in Embodiment 1. In this embodiment, the compiling process is a process of filling the sampled real-time temperatures according to predetermined positions by the data compiling module 14.

The working mode switching module 14, that is respectively coupled to the sampling module 11 and the data compiling module 13, is configured to output a switching instruction which switches the mobile terminal from the N-th working mode to the (N+1)-th working mode. In this embodiment, the switching instruction switches the mobile terminal from the video playing mode to the game mode, and triggers the sampling module 11 to continue real-time sampling surface temperature data from the positions for temperature measurement of the mobile terminal, when switched to the game mode,

The loop module 15, that is respectively coupled to the sampling module 11, the transmission module 12, the data compiling module 13 and the working mode switching module 14, is configured to output loop instructions which call the sampling module 11, the transmission module 12, the data compiling module 13 and the working mode switching module 14 in a loop until the step of sampling the real-time temperature data from the positions for temperature measurement in the M-th working mode of the mobile terminal, i.e., the last working mode, is completed.

The plotting module 16 coupled to the data compiling module 13 and the loop module 15 is configured to obtain the sampled real-time temperatures of the positions for temperature measurement of the mobile terminal in the M working modes from the data plotting module 13 and generate a temperature evolution curve chart according to the curves of the real-time temperature data from the positions for temperature measurement in M working mode of the mobile terminal compiled in a predefined manner, so as to obtain the operation situation of the mobile terminal. In this embodiment, the temperature evolution curve chart plotted by the plotting module 16 includes standard temperature curves corresponding to the temperature curves from the temperature data of positions for temperature measurement in M working mode.

The determining module 17 coupled to the plotting module 16 is configured to determine whether an exception occurs during the operation of the mobile terminal, according to the corresponding standard temperature curve of the positions for temperature measurement in M working mode. If so, the alarming module 18 and the identifying module 19 are triggered. The alarming module 18 is configured to raise an alarm when an exception is identified during the operation of the mobile terminal. The identifying module 19 is configured to identify the reason and deploy corresponding actions. If not, the sampling module 11 is triggered again to continue real-time sampling surface temperature data from the positions for temperature measurement of the mobile terminal. In embodiments, the criteria for determining by the determining module 17 whether an exception occurs during the operation of the mobile terminal is: determining whether corresponding standard temperature curve of each position for temperature measurement in M working mode is within an allowable variation range for the standard temperature curve; if so, indicating that no exceptions exist in the operation of the mobile terminal, and the sampling module 11 is triggered; and if not, indicating that exceptions exist in the operation of the mobile terminal, and the alarming module 18 and the identifying module 19 are triggered.

### EMBODIMENT 3

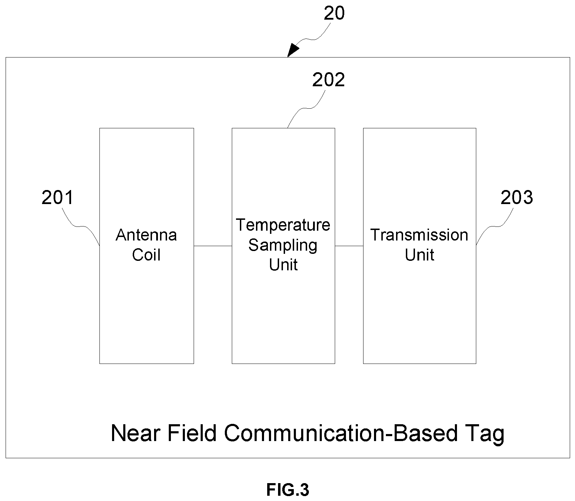

This embodiment provides a near field communication-based tag 20. The near field communication-based tag 2 is attached to the outside of a mobile terminal with a near field communication function. The mobile terminal may work in M working modes. See reference Fig. 3, a structural schematic illustrating the principles of the near field communication-based tag. The near field communication-based tag 20 includes: an antenna coil 201, a temperature sampling unit 202 and a transmission unit 203.

The antenna coil 201 is configured to receive a scan signal when the mobile terminal with a near field communication function scans the tag.

The temperature sampling unit 202 coupled to the antenna coil 201 is, after receiving the scan signal, configured to real-time sample surface temperature data from positions for temperature measurement of the near field communication-based mobile terminal, when the mobile terminal starts the N-th working mode, wherein N is equal to or greater than 1 and equal to or less than M, and M is a positive integer that is equal to or greater than 2. The transmission unit 203 coupled to the temperature sampling unit 202 is configured to transmit the sampled surface temperature data of the positions for temperature measurement of the near field communication-based mobile terminal to the mobile terminal with a near field communication function.

### EMBODIMENT 4

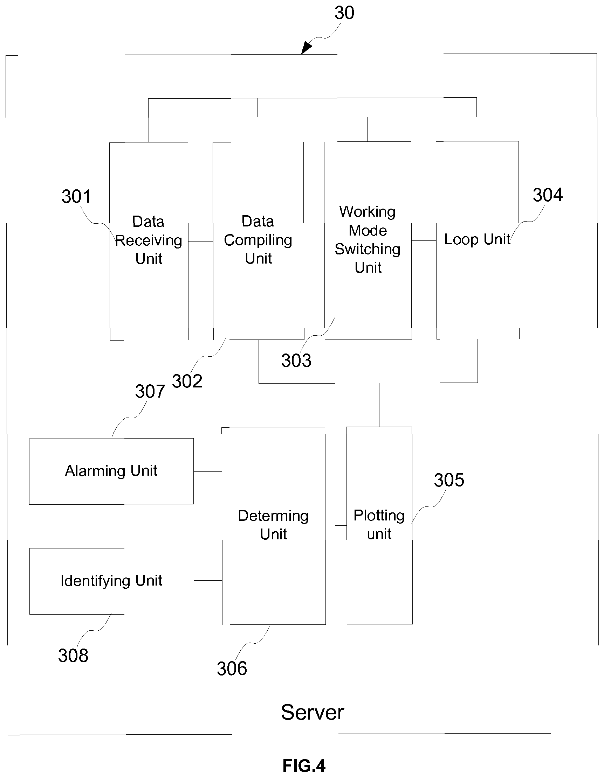

This embodiment provides a server 30. The server is connected to the mobile terminal with a near field communication function. See reference Fig. 4, a structural schematic illustrating the principles of the server. The server 30 includes: a data receiving unit 301, a data compiling unit 302, a working mode switching unit 303, a loop unit 304, a plotting unit 305, a determining module 306, an alarming unit 307 and an identifying unit 308.

The data receiving unit 301 is configured to receive the surface temperature data of the positions for temperature measurement of the mobile terminal transmitted from another mobile terminal. The data receiving unit 301 receives the surface temperature data of the positions for temperature measurement of the mobile terminal from a mobile terminal with a near field communication function that is connected to the server.

The data compiling unit 302 coupled to the data receiving unit 301 is configured to perform a compiling process on the sampled surface temperature data of the positions for temperature measurement in accordance with a predefined format in order to obtain real-time temperatures at the positions for temperature measurement in the N-th working mode which is a video playing mode. In this embodiment, the predefined format is the format of a predefined table, as shown in Table 1 in Embodiment 1. In this embodiment, the compiling process is a process of filling the real-time temperatures according to predetermined positions by the data compiling unit 302.

The working mode switching unit 303 coupled to the data compiling unit 302 is configured to output a switching instruction which switches the mobile terminal from the N-th working mode to the (N+1)-th working mode. In this embodiment, the switching instruction switches the mobile terminal from the video playing mode to a game mode, and when switched to the game mode, triggers a temperature sampling unit 202 in a near field communication-based tag 20 that is coupled to the working mode switching unit 303 in the server 30 to continue real-time sampling surface temperature data from the positions for temperature measurement of the mobile terminal.

The loop unit 304 coupled to the data receiving unit 301, the data compiling unit 302 and the working mode switching unit 303 is configured to output loop instructions which call the temperature sampling unit 201, the data receiving unit 301, the data compiling unit 302 and the working mode switching module 303 in a loop until the step of sampling of real-time temperature data from the positions for temperature measurement in the M-th working mode of the mobile terminal, i.e., the last working mode, is completed.

The plotting unit 305 coupled to the data compiling unit 302 and the loop unit 304 is configured to obtain the sampled real-time temperatures of the positions for temperature measurement of the mobile terminal in the M working modes from the data plotting unit 36 and generate a temperature evolution curve chart according to the curves of the real-time temperature data from the positions for temperature measurement in M working mode of the mobile terminal compiled in a predefined manner, so as to obtain the operation situation of the mobile terminal. In this embodiment, the temperature evolution curve chart plotted by the plotting unit 305 includes standard temperature curves corresponding to the temperature curves from the temperature data of positions for temperature measurement in M working mode.

The determining module 306 coupled to the plotting unit 305 is configured to determine whether an exception occurs during the operation of the mobile terminal, according to the corresponding standard temperature curve of the positions for temperature measurement in M working mode. If so, the alarming unit 307 and the identifying unit 308 are triggered. The alarming unit 37 is configured to raise an alarm when an exception is identified during the operation of the mobile terminal. The identifying unit 38 is configured to identify the reason and deploy corresponding actions. If not, the temperature sampling unit 201 is triggered to continue real-time sampling surface temperature data from the positions for temperature measurement of the mobile terminal. In this embodiment, the criteria for determining whether an exception occurs during the operation of the mobile terminal is: determining whether corresponding standard temperature curve of each position for temperature measurement in M working mode is within an allowable variation range for the standard temperature curve; if so, indicating that no exceptions exist in the operation of the mobile terminal, and the temperature sampling unit 202 is triggered; and if not, indicating that exceptions exist in the operation of the mobile terminal, and the alarming unit 307 and the identifying unit 308 are triggered.

In summary, the temperature data processing method and system of the present disclosure allow fast and easy reading of temperature data, easy performance of accurate temperature-rise tests, automatic uploading of temperature data, avoidance of a lot of tedious manual operations and saves the test time. Therefore, the present disclosure has effectively overcome the various drawbacks of the prior art and has a high value in industrial use.

The embodiments presented above merely explain the principles and effects of the present disclosure exemplarily and are not intended to limit the disclosure. Any person familiar with the art can make modifications or changes to the above embodiments without departing from the spirit and scope of the disclosure. Accordingly, all equivalent modifications or changes made by those of ordinary skill in the art without departing from the spirit and technical concept disclosed herein are intended to be embraced by the claims of the present disclosure.

## Claims

1. A temperature data processing method, used in a mobile terminal with a near field communication (NFC) function, the mobile terminal can be operated under M working modes, wherein the temperature data processing method comprises the steps of:
real-time sampling surface temperature data for a plurality of positions for temperature measurement on the NFC mobile terminal when the mobile terminal starts a N-th working mode; wherein N is equal to or greater than 1 and equal to or less than M, and M is a positive integer that is equal to or greater than 2;
uploading the sampled surface temperature data for the plurality of positions for temperature measurement;
processing the sampled surface temperature data for the plurality of positions for temperature measurement according to a predefined format, to obtain real-time temperature data for the plurality of positions for temperature measurement under the N-th working mode;
outputting a switching instruction which switches the mobile terminal from the N-th working mode to a (N+1)-th working mode, and returning to the step of real-time sampling surface temperature data for the plurality of positions for temperature measurement on the mobile terminal;
outputting loop instructions to repeat the above steps until the step of sampling the real-time temperatures data for the plurality of positions for temperature measurement under the M-th working mode of the mobile terminal is completed;
generating a temperature evolution curve chart according to curves of the real-time temperature data for the plurality of positions for temperature measurement under M working mode of the mobile terminal compiled in a predefined manner, to obtain an operation situation of the mobile terminal.

2. The temperature data processing method according to claim 1, wherein the plotted temperature evolution curve chart comprises standard temperature curves corresponding to the temperature curves from the temperature data for the plurality of positions for temperature measurement under M working modes.

3. The temperature data processing method according to claim 2, further comprising:
determining whether an exception occurs during operation of the mobile terminal, according to the corresponding standard temperature curve of the plurality of positions for temperature measurement under M working modes;
if so, identifying a reason and deploying corresponding actions; if not, returning to the step of real-time sampling surface temperature data for the plurality of positions for temperature measurement of the mobile terminal.

4. The temperature data processing method according to claim 3, wherein a criteria for determining whether an exception occurs during the operation of the mobile terminal is:
determining whether corresponding standard temperature curve for each position for temperature measurement in M working modes is within an allowable variation range for the standard temperature curve;
if so, indicating that no exceptions exist in the operation of the mobile terminal; or if not, indicating exceptions exist in the operation of the mobile terminal.

5. A temperature data processing system, used in a mobile terminal with a near field communication (NFC) function, the mobile terminal being able to operate under M operating modes, wherein the temperature data processing system comprises:
a sampling module, configured to real-time sample surface temperature data for a plurality of positions for temperature measurement of the NFC mobile terminal, when the mobile terminal starts the N-th working mode; wherein N is equal to or greater than 1 and equal to or less than M, and M is a positive integer that is equal to or greater than 2;
a transmission module coupled to the sampling module, configured to upload the sampled surface temperature data for the plurality of positions for temperature measurement;
a data compiling module coupled to the transmission module, configured to compile the uploaded surface temperature data for the plurality of positions for temperature measurement according to a predefined format to obtain the real-time temperature data for the plurality of positions for temperature measurement under the N-th working mode;
a working mode switching module coupled to the sampling module and the data compiling module respectively, configured to output a switching instruction to switch the working mode from N-th to N+1-th, and trigger the sampling module and a loop module to real-time sample surface temperature data for the plurality of positions for temperature measurement of the mobile terminal sequentially;
the loop module coupled to the sampling module, the transmission module, the data compiling module and the working mode switching module respectively, configured to output loop instructions to call the sampling module, the transmission module, the data compiling module and the working mode switching module in a loop until the process for real-time sampling surface temperature data for the plurality of positions for temperature measurement of the mobile terminal under a M-th working mode is completed;
a plotting module coupled to the data compiling module and the loop module, configured to generate a temperature evolution curve chart according to curves of the real-time temperature data for the plurality of positions for temperature measurement in M working modes of the mobile terminal compiled in a predefined manner, to obtain an operation situation of the mobile terminal.

6. The temperature data processing system according to claim 5, wherein standard temperature curves corresponding to the plurality of positions for temperature measurement in M working modes are prestored in the plotting module.

7. The temperature data processing system according to claim 6, wherein the temperature data processing system further comprises a determining module coupled to the plotting module, configured to determine whether an exception occurs during operation of the mobile terminal, according to the corresponding standard temperature curve of the plurality of positions for temperature measurement under M working modes; if so, calling an identifying module to identify the exception and take corresponding actions; if not, calling the sampling module.

8. The temperature data processing system according to claim 7, wherein the temperature data processing system further comprises an alarming module coupled to the determining module, configured to raise an alarm when an exception is identified during the operation of the mobile terminal.

9. A near field communication (NFC)-based tag, wherein the NFC-based tag is attached to outside of a mobile terminal with a NFC function, the mobile terminal can be operated in M working modes, the NFC-based tag comprising:
an antenna coil, configured to receive a scan signal when the mobile terminal with a NFC function scans the tag;
a temperature sampling unit, configured to real-time sample surface temperature data, after receiving the scan signal, for a plurality of positions for temperature measurement on the NFC (near field communication) mobile terminal when the mobile terminal starts a N-th working mode; wherein N is equal to or greater than 1 and equal to or less than M, and M is a positive integer that is equal to or greater than 2;
a transmission unit, configured to transmit the sampled surface temperature data for the plurality of positions for temperature measurement on the NFC mobile terminal to the mobile terminal.

10. A server, wherein the server is connected to a mobile terminal with near field communication (NFC) function, the server comprising:
a data receiving unit, configured to receive surface temperature data for a plurality of positions for temperature measurement on the mobile terminal;
a data compiling unit coupled to the data receiving unit, configured to compile the received surface temperature data for the plurality of positions for temperature measurement according to a predefined format to obtain the real-time temperature data for the plurality of positions for temperature measurement under the N-th working mode;
a working mode switching unit coupled to the sampling module, configured to output a switching instruction to switch the working mode from the N-th working mode to a (N+1)-th working mode of the mobile terminal, and trigger a loop unit and the temperature sampling unit tagged with NFC to real-time sample surface temperature data for the plurality of positions for temperature measurement of the mobile terminal sequentially;
the loop unit coupled to the data receiving unit, the data compiling unit, and the working mode switching unit, configured to output loop instructions until the process of sampling the real-time temperatures data for the plurality of positions for temperature measurement in a M-th working mode of the mobile terminal is completed;
a plotting unit coupled to the data compiling unit and the loop unit, configured to generate a temperature evolution curve chart according to curves of the real-time temperature data for the plurality of positions for temperature measurement in M working modes of the mobile terminal compiled in a predefined manner, to obtain the operation situation of the mobile terminal.
